(19) Europäisches Patentamt
European Patent Office
Office européen des brevets

(11) **EP 3 770 904 A1**

(12) **EUROPEAN PATENT APPLICATION**

(43) Date of publication:
**27.01.2021 Bulletin 2021/04**

(51) Int Cl.:
***G10L 15/22*** *(2006.01)*

(21) Application number: **19187537.6**

(22) Date of filing: **22.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayerische Motoren Werke Aktiengesellschaft**
**80809 München (DE)**

(72) Inventors:
• **Hu, Wangsu**
  **Chicago, IL 60661 (US)**
• **Tian, Jilei**
  **Chicago, IL 60605 (US)**
• **Cao, Yang**
  **Chicago, IL 60601 (US)**

(54) **MULTI-DOMAIN TRAINABLE DIALOGUE AGENT**

(57)    Given a data processing agent for providing response action (145) to utterance (101) in a natural language dialogue system, it is an objective of the present invention to provide an agent (100) that supports multi-domain tasks with low complexity and high performance. The objective is solved by an agent (100) comprising: a natural language understanding model (NLU model; 110); specifically a domain model (120); and a policy model (140), wherein the NLU model (110) is configured to receive a signal indicating an utterance (101) from a user and, at least partly based on the signal indicating the utterance (101), generate a signal indicating user intent and entity (112, 113); wherein the domain model (120) is configured to receive the signal indicating user intent and entity (112) and, at least partly based on the signal indicating user intent and entity (112), generating a signal indicating domain (124); and wherein the policy model (140) is configured to receive the signal indicating user intent and entity (114), the signal indicating domain (124), and state tracking indicating previous actions and, at least partly based on the received signals, send a signal indicating a response action (143, 145).

FIG 1

EP 3 770 904 A1

**Description**

The invention relates to an agent, a method, and a storage medium for providing multi-domain response action to utterance in a natural language dialogue system according to claim 1, claim 9, and claim 14 respectively.

Automated dialogue systems are designed for a specific task, e.g. to book a restaurant on behalf of a user. Natural human-human dialogue, in contrast, covers multi-domain tasks, e.g. human may receive instructions to book a restaurant and check the weather forecast within the same dialogue session. Humans may swap back and forth between context that automated dialogue systems cannot perform well.

Further, current rule-based state dialogue systems that may handle multi-turn conversations have high complexity dialogue management modeling and may not be apt to handle multi-domain dialogues without reasonable dialogue flow complexity.

In particular, the deficiency is solved by a data processing agent for providing multi-domain response action to utterance in a natural language, the agent comprising:

a natural language understanding model (NLU model);
a domain model; and
a policy model,

wherein the NLU model is configured to receive a signal indicating an utterance from a user and, at least partly based on the signal indicating the utterance, generate a signal indicating user intent and entity;
wherein the domain model is configured to receive the signal indicating user intent and entity and, at least partly based on the signal indicating user intent and entity, generating a signal indicating domain; and
wherein the policy model is configured to receive the signal indicating user intent and entity, the signal indicating domain, and state tracking indicating previous actions and, at least partly based on the received signals, send a signal indicating a response action.

The domain model is able to manage the domain along the dialogue session.

The NLU model (Semantics) takes utterance from user as input and provides an estimation of user intent and corresponding entities as output.

The signal indicating the utterance from the user in a natural language is typically in the form of characters encoding text of the utterance from the user. Where the utterance from the user is a voice message, a signal indicating the voice message in the form of sound encoding may be converted to text using known speech recognition software. The signal indicating the utterance from the user may also be in a sound encoded format. Similarly as many chatbot, the signal can also be the text user has typed in.

The Policy model (RNN) takes user intent and corresponding entities as input. The Policy model may also take state of slots as input, recognized domain, as well as the state tracking including the previous action. The Policy model provides response action as output.

Using user input sentence, the NLU model may be trained. Using dialogue session data, the Policy model may be trained.

Advantages include an agent that is able to handle and switch between domains, with lower complexity and good prediction accuracy. I.e. one dialogue session can have several domains, e.g. book restaurant and check the weather. The result is that services in several different domains can use the same dialogue system as the domain is defined by system rather from usage scenario by users. The system further supports iterative learning (training).

In one embodiment, the domain model is configured to generate the signal indicating domain using a stack-structured method or soft smoothing algorithm.

In one embodiment, the agent further comprises:
a state model;
wherein the state model is configured to receive the signal indicating user intent and entity and, at least partly based on the signal indicating user intent and entity, generate a signal indicating agent state; and
wherein the policy model is further configured to receive the signal indicating agent state and generate the signal indicating a response action at least partly based on the signal indicating agent state.

In one embodiment, the state model is configured to compare the user intent with a stored list of domains and, if the user intent is in the list of domains, compare a type of the entity with a stored list of keys relating to the user intent in the list of domains, and, if the type of the entity is in list of keys, store an association between a value of the entity with the type of the entity in the list of keys, and generate the signal indicating agent state at least partly based on the association.

In one embodiment, the policy model includes a long-short-term-memory neural network;
wherein the signal indicating agent state is input to long-short-term-memory neural network; and
wherein the signal indicating the response action is generated, at least partly, based on the output from the long-short-term-memory neural network.

In one embodiment, the state model is configured to receive the signal indicating a response action and generated the signal indicating agent state at least partly based on the signal indicating a response action.

In one embodiment, the NLU model embeds the utterance into an utterance embedding vector and wherein the utterance embedding vector is input to a one-dense-layer neural network to generate the signal indicating user intent and entity. The utterance embedding can be generated, e.g. by bidirectional encoded representations from transformers (BERT as known technology).

In one embodiment, the domain model is configured to generate a domain session score from a domain utterance score and a previous domain session score, for each domain of a plurality of domains; and

wherein a highest domain session score is at least partially basis for generating the signal indicating domain.

The deficiency is further solved by a computer-implemented method for providing multi-domain response action to utterance, preferably using an agent of one of the claims 1 to 8, the method comprising steps:

a) receive, by a NLU model, a signal indicating an utterance from a user;
b) at least partly based on the signal indicating the utterance, generate, by the NLU model, a signal indicating user intent and entity;
c) receive, by a domain model, the signal indicating user intent and entity;
d) at least partly based on the signal indicating user intent and entity, generate, by the domain model a signal indicating domain;
e) receive, by a policy model, the signal indicating user intent and entity and the signal indicating domain; and
f) at least partly based on the received signals, send, by the policy model, a signal indicating a response action.

In one embodiment, step d) includes using a stack-structured method or soft smoothing algorithm.

In one embodiment, the method further comprises the steps:

g) receive, by a state model, the signal indicating user intent and entity;
h) at least partly based on the signal indicating user intent and entity, generate, by the state model, a signal indicating agent state;
i) receive, by the policy model, the signal indicating agent state; and
j) generate, by the policy model, the signal indicating a response action at least partly based on the signal indicating agent state.

In one embodiment, step h) includes the steps:

i) compare the user intent with a stored list of domains and, if the user intent is in the list of domains:
ii) compare a type of the entity with a stored list of keys relating to the user intent in the list of domains, and, if the type of the entity is in list of keys,
iii) store an association between a value of the entity with the type of the entity in the list of keys, and
iv) generate the signal indicating agent state at least partly based on the association.

In one embodiment, the policy model includes a long-short-term-memory neural network;
wherein step f) includes:

provide the signal indicating agent state as input to long-short-term-memory neural network; and
generate the signal indicating the response action at least party based on the output from the long-short-term-memory neural network.

The deficiency is further solved by a computer-readable medium comprising instructions which, when executed by an instruction executing system, such as the system of one of the claims 9 to 13, cause the system to carry out the steps of the method of one of the claims 9 to 13.

In the following, embodiments of the invention are described with respect to the figures, wherein

Fig. 1    shows a dialogue flow of previous dialogue system;
Fig. 2    shows an illustration of an interactive and trainable dialogue system;
Fig. 3    shows a data processing agent;
Fig. 4    shows a NLU model assuming, e.g. a BERT based semantic embedding modeling;
Fig. 5    shows a method for generating multi-domain response action.

In the application, the following terminology is used:

- Intent: a predefined concept to describe how user messages should be categorized, e.g., <'I want to book a table for dinner time for two people'> -> intent: *restaurant book*

- Entity: a predefined concept to describe required pieces of information from a user's message (utterance), e.g., <'I want to book a table for dinner time for two people'> -> *entity type:* party size; *entity value:* two

- Domain: a predefined concept to describe high-level tasks that the dialogue is aimed to do, e.g., *restaurant booking, weather query.*

- Agent: an API that allows system to train/load/use model such as NLU semantic model and Policy model

- Action: the outcome of an agent (bot), runs in response to user utterance, e.g., *response utterance, API call, control command*

- State: every user's utterance and bot response in a convention history creates an agent state (e.g. running a bot action, receiving a user message, setting slots) that will be featurized to embed current dialogue (e.g., if intents and entities recognized, which slots are currently defined, the results of any API calls stored in slots, what the last action was, etc.

- Slot: the bot's memory that act as a *key-value store* which can be used to store information the user provided (e.g their home city) as well as information gathered about the outside world (e.g. the result of a database query).

- Interactive learning: users provide feedback/correction to the bot while talking to it. This is a powerful way to explore what the bot can do, and the easiest way to correct any mistakes the bot makes.

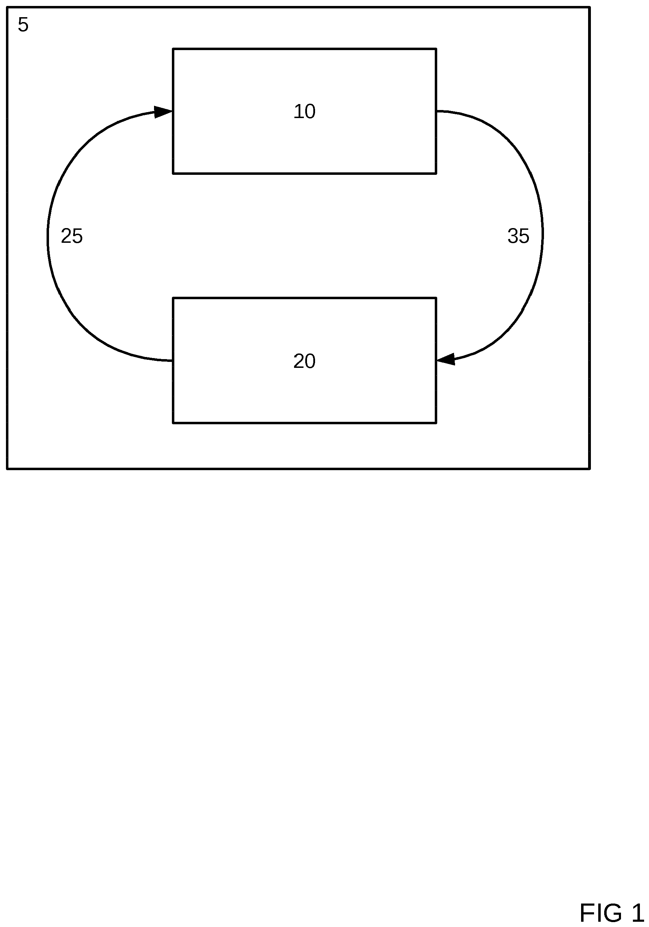

Fig. 1 shows previous dialogue system 5. The dialogue system 5 may include a user 20 and an agent 10. The user provides the agent with an utterance 25 that is input to the agent 10. The output of the agent 10 is an action 35 (such as response utterance, API call, or control command). The agent 10 may generate the action 35 using a rule-based method (*If request, then action*) or model based (*Action=F(utterance, state, knowledge base)*). Dialogue systems that are rule based are not trainable. Model based dialogue system may be trainable, but may be dealing with small domain related tasks.

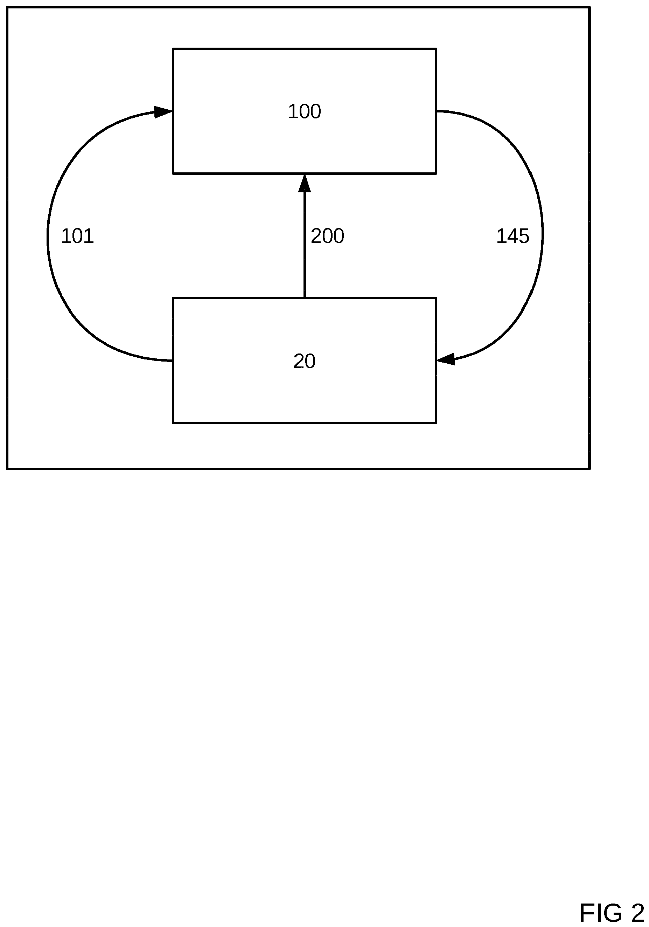

Fig. 2 shows an illustration of an interaction and training of a dialogue agent including a user 20 and an agent 100 for providing multi-domain response action 145 responsive to user utterance 101 in a natural language. Fig. 2 also shows training (feedback of correction) 200 of the agent 100.

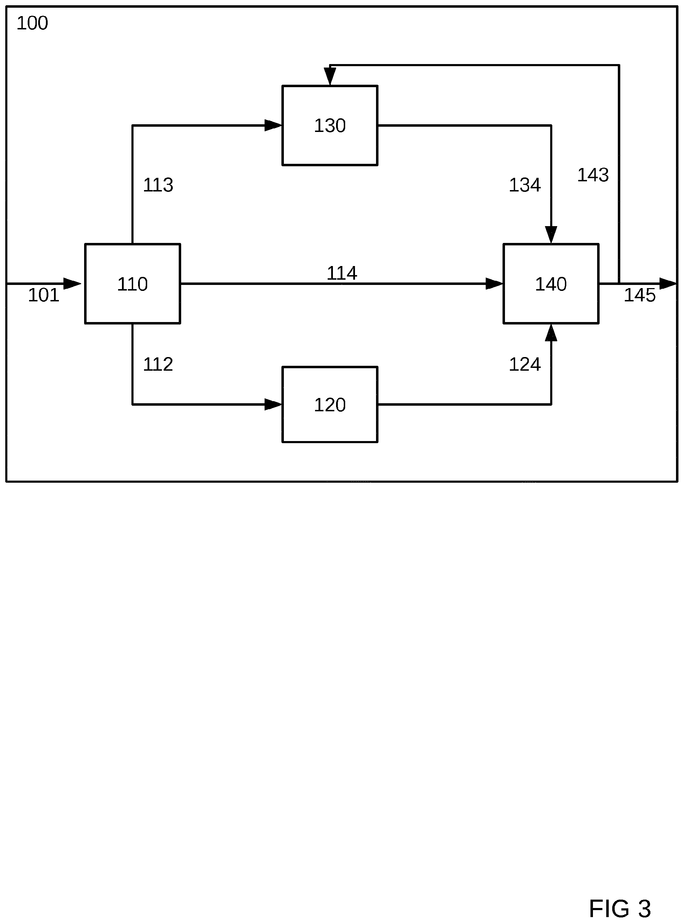

Fig. 3 shows a data processing agent 100 comprising a natural language understanding model (NLU model) 110, a domain model 120, and a policy model 140. The agent may also comprise a state model 130.

Fig. 3 further shows multi-domain response action 145 to a user utterance 101 in a natural language, a signal indicating user intent and entity 112, 113, a signal indicating domain 124, and a signal indicating a response action 143, 145. An optional signal indicating agent state 134 is also shown.

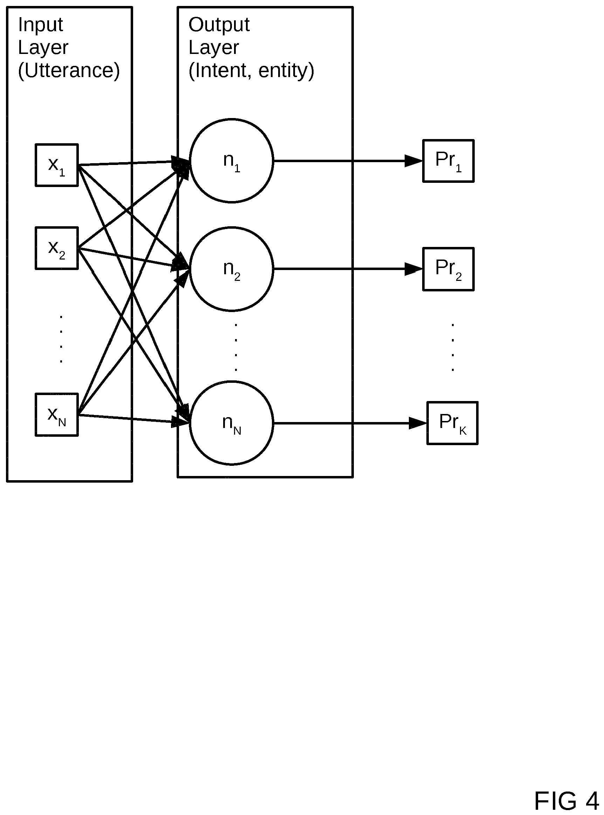

Fig. 4 shows a NLU (semantic) model 110 in the form of a neural network. Fig. 4 shows an input vector representing user utterance 101 (input layer). The vector may be an embedding vector. The NLU model includes an output layer that is trained estimate user intent and entity (112, 113, $Pr_1$ to $Pr_K$) based on the input vector representing user utterance 101.

The input of NLU semantic modeling is user's utterance < *utterance* > that can be used to output the semantic meaning $E(< utterance >)$ in two ways : intent and entity. Assuming the utterance in $i^{th}$ dialogue turn:

*"I want to book a table for dinner in Paris with Italian food for two people in a cheap range. "*

The utterance is first tokenized. Based on the tokenized utterance, an utterance embedding vector can be calculated as:

$$E(utterance_i) = Semantic[w_{pre-trained}, utterance_i], \ embedding \in E^{H \times 1}$$

where $w_{pre-trained}$ is a pre-trained parameters, and $H$ is a pre-defined feature size of embedding vector.

Given the utterance embedding $E(utterance_i)$, a simple one-dense-layer neural network can be trained to extract the intent and entity.

The intent recognition is performed as follows:

$$Z_k = E(utterance_i) \times w_k + b_k$$

$$(\widetilde{intent}_{i,k}, \widetilde{entity}_{i,k}) = Pr(\widetilde{intent}_i = k, \widetilde{entity}_i = k | E(utterance_i)) = \frac{e^{Z_k}}{\sum_k^K e^{Z_k}}$$

$$\tilde{k} = \underbrace{argmax}_{1 \le k \le K}(\widetilde{intent}_{i,k}, \widetilde{entity}_{i,k}) | E(utterance_i)$$

where $\tilde{k}$ is the predicted intent and entity combination for the input utterance embedding, *w, b* are the neural network parameters that are trained based on the ground truth (training data) *k*.

$$(w^*, b^*) = \underbrace{argmin}_{w,b} \left\| \tilde{k} - k \right\|$$

Regarding the domain model 120, the domain model 120 may have input: $d\_(i,t)$ (*utter*), i.e. an estimated score of $i^{th}$ *domain* for user's input *utter* at time *t*. The output of the domain model 120 may be: Estimated *domain* for dialogue session at time *t* (*domain-stack$_t$*).

The domain model 120 may generate a signal indicating domain 124 (dialogue session level *domain* at time *t*) using a stack-structured method. This may be done as follows:

1. Initialization at *t=0*: *domain-stack$_0$* = {}

2. IF $domain_t(session) = \underset{i}{argmax}\{d_{i,t}(utter)\} \ge Threshold$

   append recognized domain into stack:

   *domain-stack$_t$* = { *domain-stack$_{t-1}$*, *domain$_t$(session)* }

   ELSE IF domain-end is detected

   *Remove the previous appended domain from domain-stack*

3. IF *domain-stack={}*

   Ready to end the dialogue session

Alternatively (or additionally), the domain model 120 may generate a signal indicating domain 124 using the soft smoothing algorithm. This may be done as follows:

1. IF domain-end is detected

reset corresponding session domain score as 0

$$d_{i,t}(session) = 0.0$$

ELSE

$$d_{i,t}(session) = \alpha * d_{i,t}(utter) + (1 - \alpha) * d_{i,t-1}(session)$$

$$domain_t(session) = \underset{i}{\operatorname{argmax}}\{d_{i,t}(session)\}$$

Regarding the state model 130, as dialogue slot records the current and history conversation flow, the extracted intent and entity from user's utterance is fed into the dialogue slots as follows:

$$\boldsymbol{slot}_i = f(\widetilde{intent}_i, \widetilde{entity}_i, \boldsymbol{slot}_{i-1})$$

To enable the multi-domain functionality, a stack-structure is used for domain modeling to indicate the current domain of user's utterance. Stack is a linear data structure which follows a LIFO (Last In First Out) in which the operations are performed. Given a two-domain dialogue system consists of *restaurant booking* API and *weather check* API, each API requires several domain-related slots to be filled. For restaurant book, four slots' value are needed e.g.: *cuisine, location, party size, and price range;* while for weather check, one slot is needed: *location.* The procedure of slot filling can be referred as follows:

1) Set i = 1 as the first turn of conversation,
*dl* = ['*restaurant booking', 'weather query*'] as the domain list,
*ds* = [] as the domain stack, *slots*$_{restaurant\ booking}$ = {'*location': Null, 'cusine': Null, 'partysize': Null, 'price': Null*} related to restaurant booking domain, *slots*$_{weather\ query}$ = {'*location': Null*} related to weather query domain.

2) *Set i = i + 1.* Predict the $\widetilde{intent}_i$ and $\widetilde{entity}_i$ of user's utterance <*utterance$_i$*>. if $\widetilde{intent}_i \in dl$ and $entity_i.type \in slots_{\widetilde{intent}_i}.$ keys(), update $slots_{\widetilde{intent}_i}[entity_i.type]=entity_i.value.$ Set *ds* < $-ds.append(\widetilde{intent}_i).$

3) *Set i = i + 1.* if $\widetilde{intent}_i \in dl$ and $\widetilde{intent}_i != ds[last]$ where [*last*] represent the last item in the stack, set *ds* < $-ds.append(\widetilde{intent}_i),$ go to step 2 ; otherwise, bot keeps ask questions about the slot value under domain *ds[last]*.

4) If dialogue ends, stop.

5) All the slots at turn i are the information wanted.

Regarding the Policy model 140, the state of the bot (agent) is featurized S_i as follows:

$$S_i = (\boldsymbol{slot}_{i,k}, \widetilde{intent}_i, \widetilde{entity}_i, S_{i-1}, action_{i-1})$$

The bot's action $A_i$ is predicted using a recurrent neural networks (RNN) as follows:

$$\tilde{A}_i = h(\boldsymbol{w}, S_i)$$

where $h()$ applies a RNN following the Long-Short-Term-Memory (LSTM) architecture to predict the bot's action based on user's utterance, $w$ are the parameters that can be optimized based on the ground truth (training data) $A_i$.

$$w^* = \underbrace{argmin}_{w} \left\| A_i - \tilde{A}_i \right\|$$

The agent allows interactive learning (training). Training dialogue data for a dialogue system is difficult to generate and collect. An advantage with the herein disclosed agent is that, when the bot doesn't know how to do something yet, the developer can teach it or correct it as an interactive learning procedure.

In an interactive learning mode, step-by-step feedback is provided on what the bot decided to do (the response action 145). When the bot responds with wrong action, the developer may interact with the agent to tell it what the right one should be. The corrected conversation data gets logged and stored (such as to a file) and added to training data to let the model updates itself immediately.

The procedure of interactive learning program may be performed as follows:

1) Set i = 1 as the first turn of conversation.

2) Predict the $\widetilde{intent}_{i,k}$ and $\widetilde{entity}_{i,k}$ of user's utterance < $utterance_i$ >. If $\tilde{k}$ == k, continue; otherwise, set $\tilde{k}$ < - k by correction. Here k is the intent and entity combination based on the user's utterance.

3) Predict the bot's action $\tilde{A}_i$ *based on the current state of conversation* $S_i$ *generated by slot mapping program;* If $A_i$ == $\tilde{A}_i$, continue; otherwise, set $\tilde{A}_i$ < - $A_i$ by correction.

4) Set $i = i + 1$, If dialogue ends, stop; otherwise, go to step 2.

5) All the $\tilde{k}$ and $\tilde{A}_i$ are the information wanted.

6) Retain the NLU model and Policy model using the feedback.

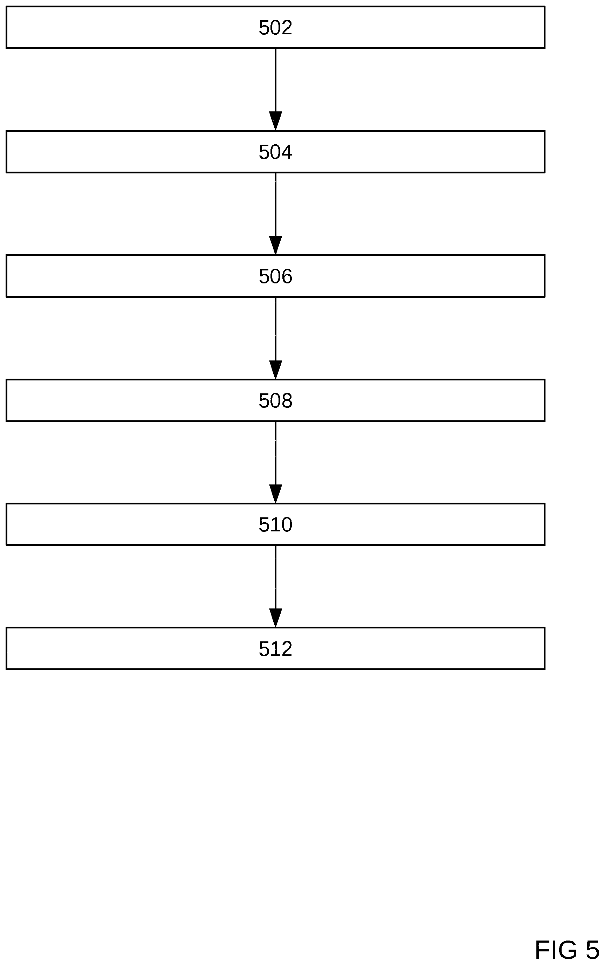

Fig. 5 shows a method for generating multi-domain response action to a user utterance. The method may include: receive 502, such as by a NLU model 110, a signal indicating an utterance 101 from a user. At least partly based on the signal indicating the utterance 101, generate 504, such as by the NLU model 110, a signal indicating user intent and entity 112, 113. Receive 506, such as by a domain model 120, the signal indicating user intent and entity 112. At least partly based on the signal indicating user intent and entity 112, generate 508, such as by the domain model 120 a signal indicating domain 124. Receive 510, such as by a policy model 140, the signal indicating user intent and entity 114 and the signal indicating domain 124. At least partly based on the received signals, send 512, such as by the policy model 140, a signal indicating a response action 143, 145.

**Claims**

1. A data processing agent (100) for providing multi-domain response action (145) to utterance (101) in a natural language dialogue system, the agent comprising:

   a natural language understanding model (NLU model; 110);
   a domain model (120); and
   a policy model (140),

   wherein the NLU model (110) is configured to receive a signal indicating an utterance (101) from a user and, at least partly based on the signal indicating the utterance (101), generate a signal indicating user intent and entity (112, 113);
   wherein the domain model (120) is configured to receive the signal indicating user intent and entity (112) and, at least partly based on the signal indicating user intent and entity (112), generating a signal indicating domain (124); and
   wherein the policy model (140) is configured to receive the signal indicating user intent and entity (114), the signal indicating domain (124), and state tracking indicating previous actions and, at least partly based on the received signals, send a signal indicating a response action (143, 145).

2. The agent of claim 1, wherein the domain model (120) is configured to generate the signal indicating domain (124) using a stack-structured method or soft smoothing algorithm.

3. The agent of claim 1 or claim 2, further comprising:
   a state model (130);
   wherein the state model (130) is configured to receive the signal indicating user intent and entity (113) and, at least partly based on the signal indicating user intent and entity (113), generate a signal indicating agent state (134); and
   wherein the policy model (140) is further configured to receive the signal indicating agent state (134) and generate the signal indicating a response action (143, 145) at least partly based on the signal indicating agent state (134).

4. The agent of claim 3,
   wherein the state model (130) is configured to compare the user intent with a stored list of domains and, if the user intent is in the list of domains, compare a type of the entity with a stored list of keys relating to the user intent in the list of domains, and, if the type of the entity is in list of keys, store an association between a value of the entity with the type of the entity in the list of keys, and generate the signal indicating agent state (134) at least partly based on the association.

5. The agent of claim 3 or claim 4,
   wherein the policy model (140) includes a long-short-term-memory neural network;
   wherein the signal indicating agent state (134) is input to long-short-term-memory neural network; and
   wherein the signal indicating the response action (143, 145) is generated, at least partly, based on the output from the long-short-term-memory neural network.

6. The agent of any of the claims 3 to 5,
   wherein the state model (130) is configured to receive the signal indicating a response action (143) and generated the signal indicating agent state (134) at least partly based on the signal indicating a response action (143).

7. The agent of any of the preceding claims,
   wherein the NLU model (110) embeds the utterance into an utterance embedding vector and wherein the utterance embedding vector is input to a one-dense-layer neural network to generate the signal indicating user intent and entity (112, 113).

8. The agent of any of the preceding claims,
   wherein the domain model (120) is configured to generate a domain session score from a domain utterance score and a previous domain session score, for each domain of a plurality of domains; and
   wherein a highest domain session score is at least partially basis for generating the signal indicating domain (124).

9. A computer-implemented method for providing multi-domain response action (145) to utterance (101), preferably using an agent of one of the claims 1 to 8, the method comprising steps:

   a) receive (502), by a NLU model (110), a signal indicating an utterance (101) from a user;
   b) at least partly based on the signal indicating the utterance (101), generate (504), by the NLU model (110), a signal indicating user intent and entity (112, 113);
   c) receive (506), by a domain model (120), the signal indicating user intent and entity (112);
   d) at least partly based on the signal indicating user intent and entity (112), generate (508), by the domain model (120) a signal indicating domain (124);
   e) receive (510), by a policy model (140), the signal indicating user intent and entity (114) and the signal indicating domain (124); and
   f) at least partly based on the received signals, send (512), by the policy model (140), a signal indicating a response action (143, 145).

10. The method of claim 9,
    wherein step d) includes using a stack-structured method or soft smoothing algorithm.

11. The method of claim 9 or claim 10, further comprising:

    g) receive, by a state model (130), the signal indicating user intent and entity (113);
    h) at least partly based on the signal indicating user intent and entity (113), generate, by the state model (130), a signal indicating agent state (134);
i) receive, by the policy model (140), the signal indicating agent state (134); and
j) generate, by the policy model (140), the signal indicating a response action (143, 145) at least partly based on the signal indicating agent state (134).

12. The method of claim 11,
wherein step h) includes the steps:

i) compare the user intent with a stored list of domains and, if the user intent is in the list of domains:
ii) compare a type of the entity with a stored list of keys relating to the user intent in the list of domains, and, if the type of the entity is in list of keys,
iii) store an association between a value of the entity with the type of the entity in the list of keys, and
iv) generate the signal indicating agent state (134) at least partly based on the association.

13. The method of claim 11 or claim 12,
wherein the policy model (140) includes a long-short-term-memory neural network;
wherein step f) includes:

provide the signal indicating agent state (134) as input to long-short-term-memory neural network; and
generate the signal indicating the response action (143, 145) at least party based on the output from the long-short-term-memory neural network.

14. A computer-readable medium comprising instructions which, when executed by an instruction executing system, such as the system of one of the claims 9 to 13, cause the system to carry out the steps of the method of one of the claims 9 to 13.

FIG 1

FIG 2

FIG 3

Input Layer (Utterance)

Output Layer (Intent, entity)

$x_1$

$x_2$

$x_N$

$n_1$

$n_2$

$n_N$

$Pr_1$

$Pr_2$

$Pr_K$

FIG 4

```
        ┌─────────────────────────────┐
        │             502             │
        └─────────────────────────────┘
                       │
                       ▼
        ┌─────────────────────────────┐
        │             504             │
        └─────────────────────────────┘
                       │
                       ▼
        ┌─────────────────────────────┐
        │             506             │
        └─────────────────────────────┘
                       │
                       ▼
        ┌─────────────────────────────┐
        │             508             │
        └─────────────────────────────┘
                       │
                       ▼
        ┌─────────────────────────────┐
        │             510             │
        └─────────────────────────────┘
                       │
                       ▼
        ┌─────────────────────────────┐
        │             512             │
        └─────────────────────────────┘
```

FIG 5

EP 3 770 904 A1

**European Patent Office**

Europäisches Patentamt

European Patent Office

Office européen des brevets

# EUROPEAN SEARCH REPORT

Application Number

EP 19 18 7537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/066668 A1 (LIN XIHUI [CA] ET AL) 28 February 2019 (2019-02-28) * paragraph [0005] * * paragraph [0036] - paragraph [0038] * ----- | 1-14 | INV. G10L15/22 |
| A | US 2009/150156 A1 (KENNEWICK MICHAEL R [US] ET AL) 11 June 2009 (2009-06-11) * paragraph [0018] * ----- | 2,10 | |
| A | US 2018/233143 A1 (PAPANGELIS ALEXANDROS [GB] ET AL) 16 August 2018 (2018-08-16) * paragraph [0101] - paragraph [0142] * * figure 2 * ----- | 3,6,8,11 | |
| A | DILEK HAKKANI-T?R ET AL: "Multi-Domain Joint Semantic Frame Parsing Using Bi-Directional RNN-LSTM", INTERSPEECH 2016, vol. 2016, 8 September 2016 (2016-09-08), pages 715-719, XP055406473, ISSN: 1990-9772, DOI: 10.21437/Interspeech.2016-402 * section 3 * ----- | 5,13 | |

TECHNICAL FIELDS SEARCHED (IPC)

G10L
G06F

The present search report has been drawn up for all claims

| Place of search | Date of completion of the search | Examiner |
|---|---|---|
| The Hague | 9 January 2020 | Schneider, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 7537

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2020

| Patent document cited in search report | | Publication date | Patent family member(s) | | Publication date |
|---|---|---|---|---|---|
| US 2019066668 | A1 | 28-02-2019 | US | 2019066668 A1 | 28-02-2019 |
| | | | WO | 2019040167 A1 | 28-02-2019 |
| US 2009150156 | A1 | 11-06-2009 | CN | 101939740 A | 05-01-2011 |
| | | | CN | 109147781 A | 04-01-2019 |
| | | | EP | 2232388 A1 | 29-09-2010 |
| | | | EP | 2273491 A1 | 12-01-2011 |
| | | | US | 2009150156 A1 | 11-06-2009 |
| | | | US | 2012101809 A1 | 26-04-2012 |
| | | | US | 2012101810 A1 | 26-04-2012 |
| | | | US | 2012109753 A1 | 03-05-2012 |
| | | | US | 2013211710 A1 | 15-08-2013 |
| | | | US | 2014156278 A1 | 05-06-2014 |
| | | | US | 2014288934 A1 | 25-09-2014 |
| | | | US | 2015073910 A1 | 12-03-2015 |
| | | | US | 2015095159 A1 | 02-04-2015 |
| | | | US | 2017270925 A1 | 21-09-2017 |
| | | | WO | 2009075912 A1 | 18-06-2009 |
| US 2018233143 | A1 | 16-08-2018 | GB | 2559618 A | 15-08-2018 |
| | | | JP | 6562982 B2 | 21-08-2019 |
| | | | JP | 2018133070 A | 23-08-2018 |
| | | | US | 2018233143 A1 | 16-08-2018 |

EPO FORM P0459

For more details about this annex : see Official Journal of the European Patent Office, No. 12/82